# EUROPEAN PATENT SPECIFICATION

(11) **EP 3 370 298 B1**
(45) Date of publication and mention of the grant of the patent: **06.03.2024**
(21) Application number: 15907315.4
(22) Date of filing: 30.10.2015
(51) Int. Cl.: H01M 10/42, H01M 10/48, G07C 9/00

(54) **BATTERY CONTROL APPARATUS AND BATTERY SYSTEM**
BATTERIESTEUERUNGSVORRICHTUNG UND BATTERIESYSTEM
APPAREIL DE COMMANDE DE BATTERIE ET SYSTÈME DE BATTERIE

(43) Date of publication of application: 05.09.2018
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: NOGUCHI Makoto, Tokyo 105-8001 (JP); OKABE Ryo, Tokyo 105-8001 (JP); KOSUGI Shinichiro, Tokyo 105-8001 (JP); SEKINO Masahiro, Tokyo 105-8001 (JP); KURODA Kazuto, Tokyo 105-8001 (JP); KANEKO Norihiro, Tokyo 105-8001 (JP); SAEKI Yosuke, Tokyo 105-8001 (JP); KIKUCHI Yusuke, Tokyo 105-8001 (JP)
(74) Representative: AWA Sweden AB
(86) International application number: PCT/JP2015/080729
(87) International publication number: WO 2017/072951

(56) References cited:
- EP-A1- 2 357 713
- JP-A- 2013 027 299
- JP-A- 2015 008 040
- US-A1- 2015 286 198

## Description

### TECHNICAL FIELD

The embodiments of the present invention relate to a battery control apparatus and a battery system.

### BACKGROUND ART

Battery control apparatuses which manage a plurality of batteries and transmit states of the batteries to an external apparatus are known. Since a plurality of batteries are connected to each other via one communication channel in a conventional battery control apparatus, there is a limit to the number of connectable batteries due to an influence such as attenuation in signal strength of signals transmitted to the batteries. Furthermore, if a plurality of communication channels are provided, batteries cannot be flexibly arranged in some cases. US2015/286198 A1 relates to an information processing apparatus, a communication method, a power storage device, and an electric vehicle.

### PRIOR ART DOCUMENTS

### PATENT DOCUMENTS

[Patent Document 1]
Japanese Unexamined Patent Application, First Publication No. 2014-124089

### SUMMARY OF INVENTION

### PROBLEMS TO BE SOLVED BY THE INVENTION

An object to be accomplished by the present invention is to provide a battery control apparatus and a battery system in which batteries can be more flexibly arranged.

### SOLUTION TO PROBLEM

According to one embodiment, a battery control apparatus according to an embodiment includes a counter, a serial information setter, and an information transmitter. The counter counts, for communication lines to which a plurality of battery modules are connected to form communication channels, the number of battery modules connected to each of the communication lines. The serial information setter sets a series of pieces of information about the battery modules connected to the plurality of communication lines as information for identifying the battery modules on the basis of the number of battery modules counted by the counter. The information transmitter transmits, to an external apparatus, management information in which status information of each of the battery modules is associated with each piece of the series of pieces of information set by the serial information setter.

### BRIEF DESCRIPTION OF THE DRAWINGS

Fig. 1 is a diagram illustrating an example of a constitution of a battery system 200 according to a first embodiment.
Fig. 2 is a diagram illustrating an example of an application of the battery system 200 according to the first embodiment.
Fig. 3 is a diagram illustrating an example of a constitution of a battery control apparatus 100 according to the first embodiment.
Fig. 4 is a diagram illustrating an example of a constitution of a battery module MDL according to the first embodiment.
Fig. 5 is a flowchart for describing an example of a flow of a process of a battery controller 110 according to the first embodiment.
Fig. 6 is a diagram illustrating an example of a result of setting a serial number in a battery module MDL by a serial information setter 114 in the first embodiment.
Fig. 7 is a diagram illustrating another example of a result of setting a serial number in a battery module MDL by the serial information setter 114 in the first embodiment.
Fig. 8 is a diagram illustrating an example of a result of setting a serial number in a battery module MDL using a conventional technique.
Fig. 9 is a diagram illustrating another example of a result of setting a serial number in a battery module MDL by the serial information setter 114 in the first embodiment.
Fig. 10 is a diagram illustrating an example of a constitution of a battery control apparatus 100A according to a second embodiment.
Fig. 11 is a flowchart for describing an example of a flow of a process of the battery controller 110A according to the second embodiment.

### EMBODIMENTS FOR CARRYING OUT THE INVENTION

Hereinafter, a battery control apparatus and a battery system of the embodiments will be described with reference to drawings.

### (First embodiment)

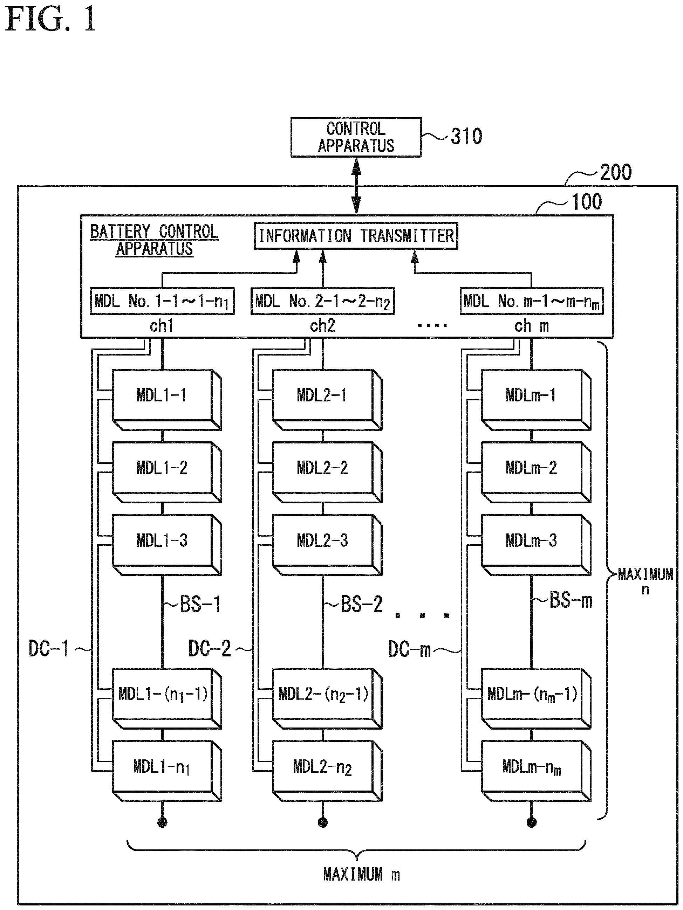

Fig. 1 is a diagram illustrating an example of a constitution of a battery system 200 according to a first embodiment. The battery system 200 in the embodiment may include, for example, a plurality of battery modules MDL1-1 to MDLm-nm and a battery control apparatus 100, but the present invention is not limited thereto. The plurality of battery modules MDL1-1 to MDLm-nm and the battery control apparatus 100 may be connected via a first communication line DC and a second communication line BS which form communication channels (indicated by ch in the drawings). Here, the communication channels are a group of communication groups formed by connecting the battery control apparatus 100 and some or all of the battery modules MDL1-1 to MDLm-nm through the first communication line DC and the second communication line BS. Hereinafter, when a battery module is not distinguished from other battery modules, it is simply referred to as a battery module MDL.

The battery control apparatus 100 communicates with a control apparatus 310. The control apparatus 310 determines an amount of charge and discharge for the battery system 200 on the basis of, for example, management information transmitted by the battery control apparatus 100 and transmits charge and discharge power instructions including the amount of charge and discharge to the battery control apparatus 100.

For example, the first communication line DC connects the plurality of battery modules MDL and the battery control apparatus 100 in an annular daisy chain shape. The first communication line DC has an output side line from which a signal is output and an input side line to which a signal is input when viewed from the battery control apparatus 100. Furthermore, the plurality of battery modules MDL are connected to the battery control apparatus 100 through the second communication line BS as an internal bus. The second communication line BS is, for example, a CAN cable and an end portion of the second communication line BS has, for example, a terminating resistor (or a device corresponding thereto) connected thereto.

The plurality of battery modules MDL are connected through power lines (not shown). The power lines may be formed in a different form from those of the first communication line DC and the second communication line BS described above and battery modules MDL constituting one communication channel may be connected in series or in parallel. Furthermore, battery modules MDL across a plurality of communication channels may be connected in series with one power line. In this way, in the battery system 200, a constitution of each of the communication channels (each of the communication lines) and a connection constitution on each of the power lines can be independently arbitrarily determined.

Generally, since distance attenuation or the like occurs in signals transmitted to the second communication line BS functioning as an internal bus in accordance with a length of each of the communication lines, there is an effective length in a line length of the second communication line BS. Furthermore, when communication is performed on the basis of a CAN protocol, there is limitation on the number of communication nodes associated with arbitration processing. For this reason, there is a limit to the number of battery modules MDL which can be connected to one communication channel. In the embodiment, a case in which the maximum number of battery modules MDL which can be connected to one communication channel is set to n will be exemplified.

The number of communication channels in the battery control apparatus 100 is also limited due to distributed processing capability or the like of the battery control apparatus 100. A case in which the maximum number of communication channels in the battery control apparatus 100 is set to m will be exemplified below.

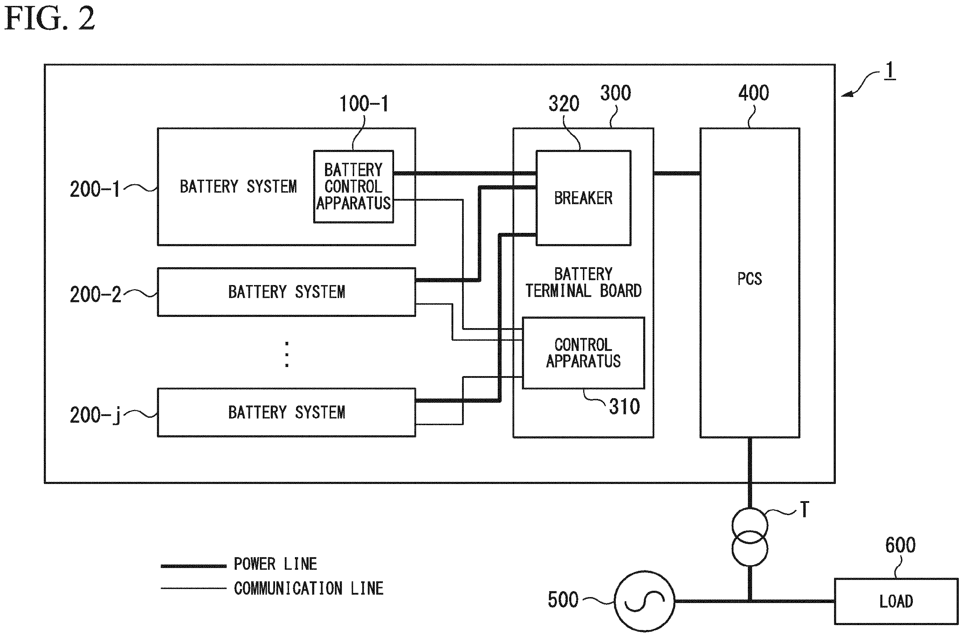

Fig. 2 is a diagram illustrating an example of an application of the battery system 200 according to the first embodiment. The battery system 200 is connected to, for example, a power conditioning system (PCS) 400 via a battery terminal board 300 when used and constitutes a power system 1. The PCS 400 is connected to, for example, a system power 500 and a load 600.

Each of a plurality of battery systems 200-1 to 200-j includes, for example, the plurality of battery modules MDL and the battery control apparatus 100 described above. The battery control apparatus 100 causes the battery module MDL to be subjected to charging and discharging in units of these battery systems.

The battery terminal board 300 may include the control apparatus 310 and a breaker 320, but the present invention is not limited thereto. The control apparatus 310 may include a processor such a central processing unit (CPU). The control apparatus 310 monitors a status of the breaker 320, transmits information received from the PCS 400 to the battery control apparatus 100 of each of the battery systems, and transmits information received from the battery control apparatus 100 to the PCS 400. Furthermore, the control apparatus 310 controls the breaker 320 on the basis of the information received from the battery control apparatus 100 to electrically connect or disconnect the battery system 200 side and the PCS 400 side. The control apparatus 310 is an example of an external apparatus.

The breaker 320 cuts off electric power discharged by each of the battery systems 200 or electric power supplied to each of the battery systems 200 to perform charging in a circuit network of the power lines. The breaker 320 may function as, for example, a disconnecting switch (service disconnect) and function as a fuse. The breaker 320 may be included in each of the battery systems 200-1 to 200-j. In this case, each battery control apparatus 100 may control the breaker 320 provided in the same battery system 200 to switch charging or discharging by the battery module MDL.

The PCS 400 includes a processor such as a CPU, a communication interface for bidirectionally communicating with the control apparatus 310, or the like. For example, the PCS 400 converts direct current (DC) power discharged from the battery system 200 into alternating current (AC) power on the basis of a control signal transmitted by the control apparatus 310 and steps up a voltage of the converted AC power. Furthermore, for example, the PCS 400 converts AC power supplied from the system power 500 and voltage-converted by a transformer T into DC power and steps down the DC power to a voltage by which the battery module MDL can be charged. It should be noted that the battery system 200 is not limited to the application example of the above-described application and can be used as a battery system installed in, for example, a moving body such as a railroad car, an automobile, a ship, or an airplane.

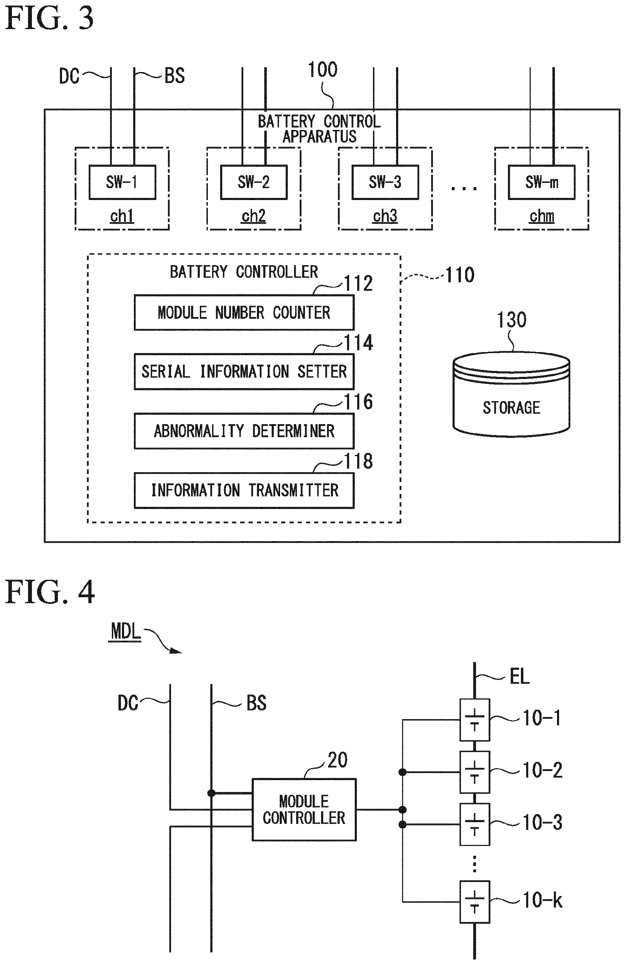

Fig. 3 is a diagram illustrating an example of a constitution of a battery control apparatus 100 according to the first embodiment. The battery control apparatus 100 according to the embodiment may include connection switches SW-1 to SW-m to which the first communication line DC and the second communication line BS forming each of a plurality of communication channels are connected, a battery controller 110, and a storage 130, but the present invention is not limited thereto. Hereinafter, when a connection switch is not distinguished from other connection switches, it is simply referred to as a connection switch SW.

A power cable configured to supply electric power, a ground line, or the like may be connected to each of the connection switches SW together with the first communication line DC and the second communication line BS described above. Each of the connection switches SW detects that one or both of the first communication line DC and the second communication line BS are connected.

For example, the connection switch SW detects that the first communication line DC and the second communication line BS are connected to the battery control apparatus 100 by detecting that a voltage of a detection point at which a predetermined voltage is applied in advance decreases to about 0 V in response to the connection of the ground line forming a bundle of cables together with the first communication line DC and the second communication line BS. In this case, the connection switch SW outputs an ON signal (a voltage signal of 0 V) to the battery controller 110 when the first communication line DC and the second communication line BS are connected to the battery control apparatus 100. In the following description, a state in which an ON signal is output by the connection switch SW, that is, a state in which the first communication line DC and the second communication line BS are connected, is referred to as an "on state," and a state in which an ON signal is not output by the connection switch SW, that is, a state in which the first communication line DC and the second communication line BS are not connected, is referred to as an "off state." It should be noted that the connection switch SW may not be a switch configured to detect that the voltage of the detection point decreases from the predetermined voltage to about 0 V as described above but may be a switch configured to detect that a voltage of a detection point increases to a predetermined voltage.

The battery controller 110 may include, for example, a module number counter (counter) 112, a serial information setter 114, an abnormality determiner 116, and an information transmitter 118, but the present invention is not limited thereto. Some or all functional units in the battery controller 110 may be realized when a processor such as a CPU executes a program stored in the storage 130. For example, a program may be downloaded from an application server over a network or a program stored in a portable storage medium such as an SD card may be installed in the battery control apparatus 100. Furthermore, some or all functional units in the battery controller 110 may be realized by hardware such as a large scale integration (LSI), an application specific integrated circuit (ASIC), and a field-programmable gate array (FPGA).

The storage 130 may be realized by, for example, a nonvolatile storage medium such as a read only memory (ROM), a flash memory, a hard disk drive (HDD), and an SD card and a volatile storage medium such as a random access memory and a register. The storage 130 stores a program executed by a processor and stores processing results by the battery controller 110.

When the connection switch SW is in the on state, the module number counter 112 counts the number of battery modules MDL connected to a first communication line DC (or a second communication line BS) forming a communication channel corresponding to the connection switch SW. For example, the module number counter 112 determines whether or not the connection switch SW is in the on state for each first communication line DC (communication channel), transmits a check signal (predetermined signal) for counting the number of battery modules MDL to the first communication line DC if the connection switch SW changes from the off state to the on state, and counts the number of battery modules MDL upon receiving a response signal to the check signal.

The serial information setter 114 sets a series of pieces of information about the battery modules MDL connected to the plurality of first communication lines DC as information for identifying the battery modules MDL for each battery module MDL on the basis of the number of battery modules MDL counted by the module number counter 112. The series of pieces of information is, for example, information represented by consecutive numbers (1, 2, 3, ...) or letters (A, B, C, ...) and may be any form of information as long as the information can be processed by the control apparatus 310. In the embodiment, a case in which the series of pieces of information is serial numbers with decimal numbers will be described.

The abnormality determiner 116 determines whether or not an abnormality has occurred in the battery module MDL for each of the first communication lines DC in accordance with the presence or the absence of reception of a response signal with respect to a check signal transmitted by the module number counter 112 when the check signal is transmitted. For example, the abnormality determiner 116 determines that an abnormality has occurred in a battery module MDL connected to a first communication line DC to which the check signal is transmitted if it is determined that the response signal is not received or if it is determined that the response signal including content other than preliminarily assumed content is received. Furthermore, the abnormality determiner 116 determines that no abnormality has occurred in a battery module MDL connected to the first communication line DC to which the check signal is transmitted if it is determined that a normal response signal is received.

The abnormality determiner 116 determines that some internal functions of the battery module MDL have failed if it is determined that an abnormality has occurred in the battery module MDL and a signal indicating that the battery module MDL has failed (hereinafter referred to as a "failure signal") is received from the battery module MDL via the second communication line BS.

On the other hand, the abnormality determiner 116 determines that all of the battery modules MDL have failed if it is determined that an abnormality has occurred in the battery modules MDL and the failure signal is not received from the battery module MDL via the second communication line BS.

The information transmitter 118 transmits management information in which status information of the battery module MDL is associated with each of a series of pieces of information set by the serial information setter 114 to the control apparatus 310. For example, in the management information, a state of charge (SOC) of each of the battery modules MDL, a determination result by the abnormality determiner 116, or other status information may be associated with each piece of the series of pieces of information.

Fig. 4 is a diagram illustrating an example of a constitution of a battery module MDL according to the first embodiment. The battery module MDL may include, for example, a plurality of secondary batteries 10-1 to 10-k and a module controller 20, but the present invention is not limited thereto. In the illustrated example, the plurality of secondary batteries 10-1 to 10-k are connected in series through power lines EL. The plurality of secondary batteries 10-1 to 10-k are, for example, lithium ion batteries, lead storage batteries, sodium sulfur batteries, redox flow batteries, nickel hydrogen batteries, or the like. In the case of a lithium ion battery, lithium titanate may be used as a negative electrode material. Furthermore, each of the plurality of secondary batteries 10-1 to 10-k may be an assembled battery in which a plurality of battery cells are connected to each other in parallel or in series.

The module controller 20 causes each of the plurality of secondary batteries 10-1 to 10-k to be charged or discharged, for example, under the control of the battery control apparatus 100 which receives a charge and discharge power instruction. At this time, the module controller 20 transmits a failure signal to the battery control apparatus 100 via the second communication line BS when it cannot cause any of the secondary batteries 10-1 to 10-k to be charged or discharged. The module controller 20 may cause each of the plurality of secondary batteries 10-1 to 10-k to be discharged under the control of the battery control apparatus 100 even when a charge and discharge power instruction is not transmitted to the battery control apparatus 100. Furthermore, the module controller 20 may perform such charging/discharging control without being controlled by the battery control apparatus 100.

Also, the module controller 20 rewrites, for example, a predetermined variable in a check signal to a value obtained by incrementing a value of the predetermined variable by 1 upon receiving the check signal from the battery control apparatus 100 via the first communication line DC and transmits the check signal with the rewritten variable to a battery module MDL which is electrically adjacent to its own battery module MDL via the first communication line DC. In a communication channel ch1 in the above-described example of Fig. 1, a predetermined variable in a check signal transmitted by the battery control apparatus 100 is rewritten by the battery module MDL1-1. The check signal with the rewritten variable is transmitted from the battery module MDL1-1 to the battery module MDL1-2. In this way, the variable in the check signal is incremented by 1 each time the signal is transmitted to a battery module MDL of a subsequent stage when viewed from the battery control apparatus 100 side. A battery module MDL1-n1 of a last stage rewrites the variable in the check signal to a value obtained by incrementing the variable by 1 and then transmits the check signal to the battery control apparatus 100 as a response signal. Thus, the battery control apparatus 100 determines the number of battery modules MDL connected to the first communication line DC by checking the variable in the check signal received as the response signal. The module controller 20 may notify the battery control apparatus 100 of the number of battery modules MDL obtained by decrementing a predetermined variable in the check signal (for example, a value set to be equal to or larger than a maximum value n of the battery modules MDL for each communication channel) by 1 instead of incrementing the variable by 1.

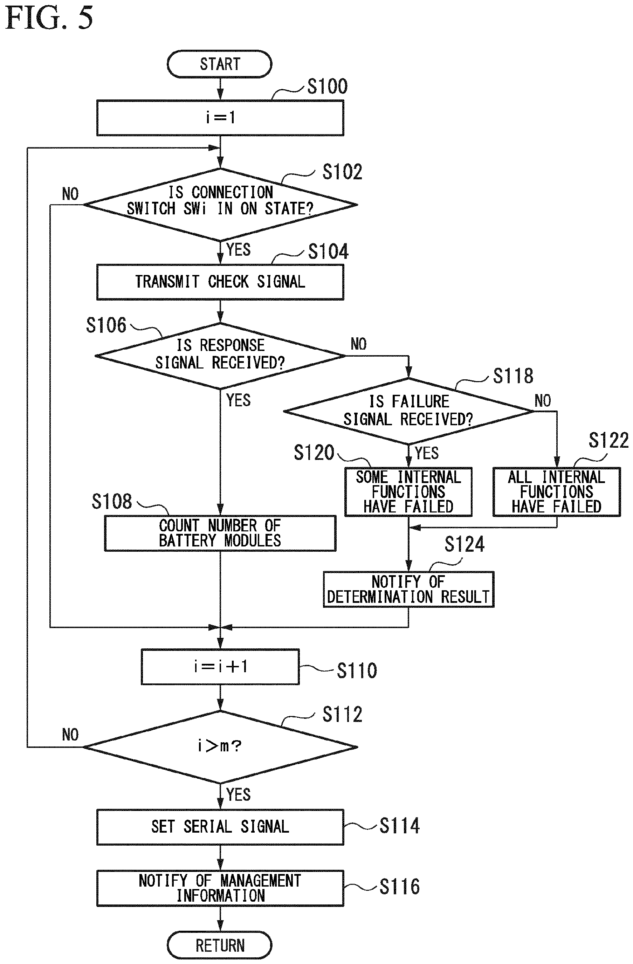

A flow of a process of the battery controller 110 according to the first embodiment will be described below with reference to a flowchart. Fig. 5 is a flowchart for describing an example of the flow of the process of the battery controller 110 according to the first embodiment. The process of the flowchart is started, for example, when the battery system 200 is started up.

First, the module number counter 112 sets an internal parameter i to 1 (Step S100). Subsequently, the module number counter 112 determines whether or not a connection switch SWi corresponding to an i^{th} communication channel chi is in an on state (Step S102).

If it is determined that the connection switch SWi is in the on state, the module number counter 112 transmits a check signal to a battery module MDLi-1 via an output side line of a first communication line DC-i forming the communication channel chi (Step S104).

Subsequently, the module number counter 112 determines whether or not a check signal (response signal) with a written variable is received from the battery module MDLi-ni (for example, MDL1-n1) of a last stage via the input side line of the first communication line DC-i (Step S106).

The module number counter 112 counts (determines) the number of battery modules MDL connected to the first communication line DC-1 forming the communication channel ch1 with reference to a value of the variable included in a response signal if it is determined that the response signal is received (Step S108).

Subsequently, the module number counter 112 increments the internal parameter i (Step S110) and determines whether or not the internal parameter i exceeds the maximum number m of communication channels included in the battery control apparatus 100 (Step S112). The module number counter 112 repeats the above-described processes of Step S102 to Step S110 until a value of a communication channel number reaches the maximum number m of communication channels.

When a value of a communication channel number incremented by 1 by the module number counter 112 exceeds the maximum number m of communication channels included in the battery control apparatus 100, the serial information setter 114 sets serial numbers for battery modules MDL connected to a plurality of first communication lines DC as information for identifying the battery modules MDL for each of the battery modules MDL on the basis of the number of battery modules MDL counted by the module number counter 112 (Step S114).

Subsequently, the information transmitter 118 associates status information including information such as an SOC of each of the battery modules MDL and the presence or the absence of a failure with the serial numbers set by the serial information setter 114, notifies the control apparatus 310 of the associated information as one piece of management information (Step S 116), and ends the process of the flowchart.

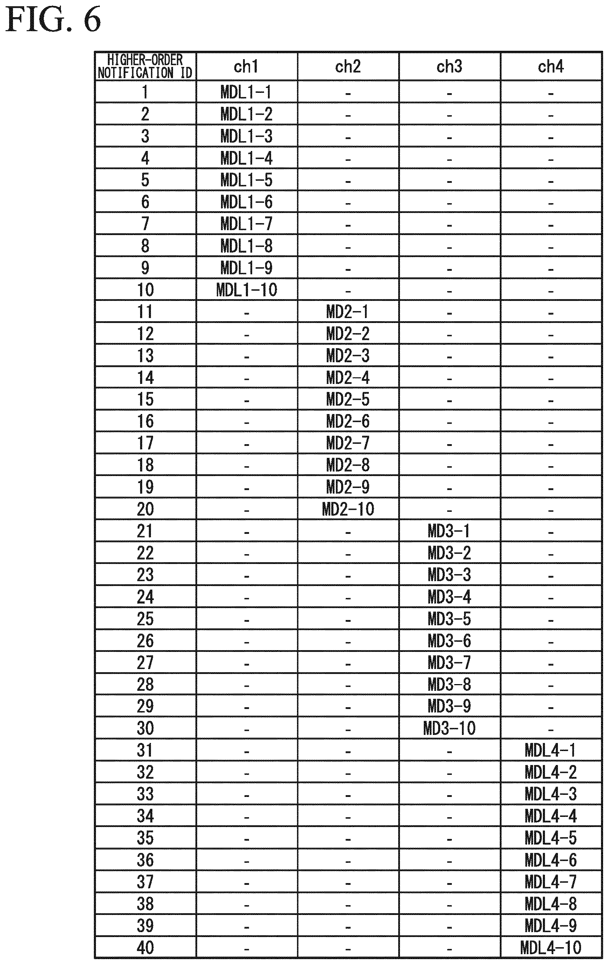

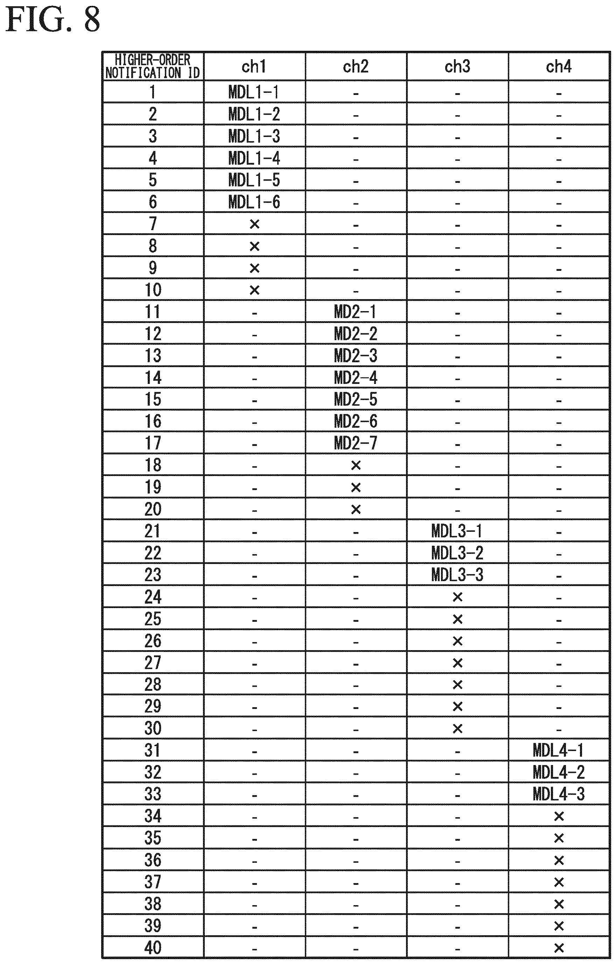

A case in which a negative determination is obtained in Step S106 will be described later and setting of a serial number will be described first. Figs. 6, 7, and 9 are diagrams illustrating an example of a result of setting a serial number in the battery module MDL by the serial information setter 114 in the first embodiment. Furthermore, Fig. 8 is a diagram illustrating an example of a result of setting a serial number in the battery module MDL using a conventional technique. In the examples illustrated in Figs. 6 to 9, a case in which the maximum number m of communication channels included in the battery control apparatus 100 is 4 is illustrated.

In the example illustrated in Fig. 6, a usage situation in which ten battery modules MDL are equally connected to each of first communication lines DC forming communication channels ch1 to ch4 is illustrated. In such a case, the serial information setter 114 sets values of 1 to 10 to the battery module MDL of the communication channel ch1 which is initially selected by the module number counter 112 with serial numbers. Subsequently, the serial information setter 114 sets values of 11 to 20 which are numbers subsequent to the numbers set to the battery module MDL of the communication channel ch1 to the battery module MDL of the communication channel ch2 selected second by the module number counter 112 with serial numbers. Similarly, the serial information setter 114 sets a serial number subsequent to the number set to the battery module MDL of the communication channel ch2 to the battery module MDL of the communication channel ch3 and sets a serial number subsequent to the number set to the battery module MDL of the communication channel ch3 to the battery module MDL of the communication channel ch4.

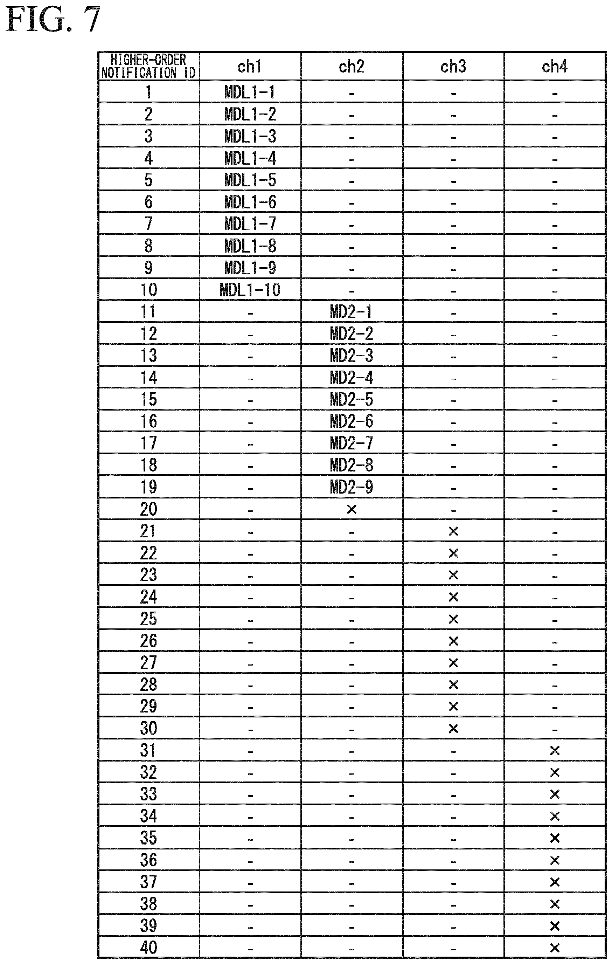

Also, in the example illustrated in Fig. 7, a usage situation in which ten battery modules MDL are connected to the first communication line DC-1 of the communication channel ch1, nine battery modules MDL are connected to the first communication line DC-2 of the communication channel ch2, and a battery module MDL is not connected to the first communication lines DC-3 and DC-4 of the communication channels sch3 and ch4 is illustrated. In such a case, the serial information setter 114 sets serial numbers to the ten battery modules MDL connected to the first communication line DC-1 of the communication channel ch1 and the nine battery modules MDL connected to the first communication line DC-2 of the communication channel ch2. Furthermore, the serial information setter 114 sets serial numbers to the first communication lines DC-3 and DC-4 to which the battery module MDL is not connected.

In the case of Fig. 8 illustrating results of a conventional technique, a usage situation in which six battery modules MDL are connected to a first communication line DC-1 of a communication channel ch1, seven battery modules MDL are connected to a first communication line DC-2 of a communication channel ch2, three battery modules MDL are connected to a first communication line DC-3 of a communication channel ch3, and three battery modules MDL are connected to a first communication line DC-4 of a communication channel ch4 is illustrated. In such a case, in a conventional technique, serial numbers (ten in this case) corresponding to the maximum number of battery modules MDL which can be connected to the first communication line DC-1 are set regardless of the number of battery modules MDL connected to the first communication line DC-1 of the communication channel ch1. Therefore, serial numbers set to the seven battery modules MDL connected to the first communication line DC-2 of the communication channel ch2 are not serial numbers subsequent to an actual serial number set to the battery module MDL of the communication channel ch1 and are set to have a number subsequent to one of numbers that are not necessary, i.e., 7 to 10. In the conventional technique, unnecessary serial numbers, i.e., 7 to 10, and status information corresponding to these serial numbers are included in management information and the control apparatus 310 is notified of the management information. Similarly, in the conventional technique, serial numbers, i.e., 18 to 20, 24 to 30, or 34 to 40 are set to the communication channels sch2 to ch4, status information corresponding to these serial numbers is included in management information, and the control apparatus 310 is notified of the management information. As a result, in the conventional technique, an amount of communication information with the control apparatus 310 increases and a processing load on the control apparatus 310 side tends to increase.

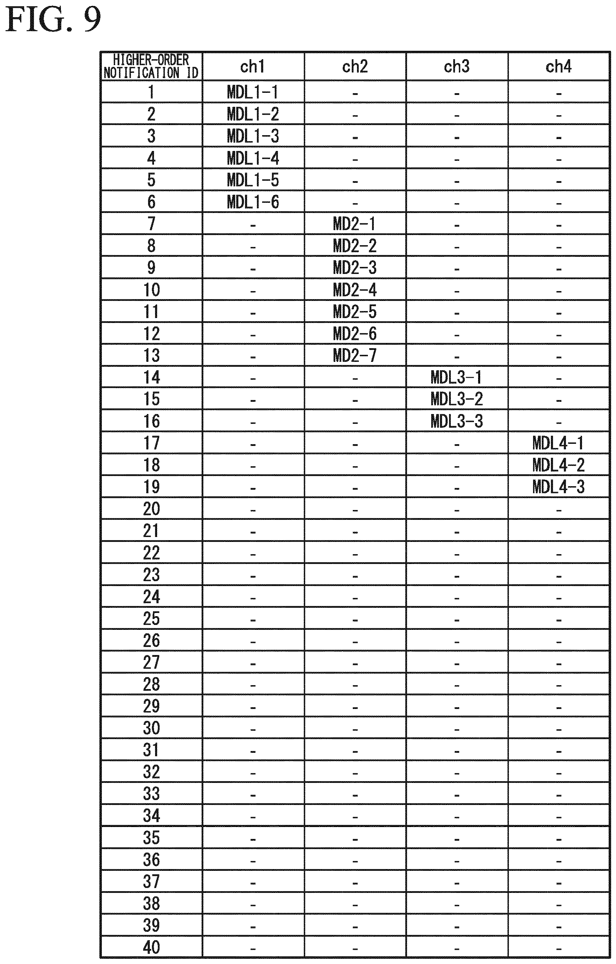

On the other hand, in this embodiment, as illustrated in Fig. 9, the number of battery modules MDL connected to the first communication line DC is counted by the module number counter 112 to set serial numbers to all of the battery modules MDL connected to the first communication line DC even when a maximum number of battery modules MDL are not connected to the first communication line DC. In the example of Fig. 9, like in Fig. 8, a usage situation in which six battery modules MDL are connected to the first communication line DC-1 of the communication channel ch1, seven battery modules MDL are connected to the first communication line DC-2 of the communication channel ch2, three battery modules MDL are connected to the first communication line DC-3 of the communication channel ch3, and three battery modules MDL are connected to the first communication line DC-4 of the communication channel ch4 is illustrated. The information transmitter 118 in the embodiment does not include status information corresponding to an originally unnecessary number in management information as illustrated in Fig. 8 because serial numbers are set only to battery modules MDL which are actually connected to the first communication line DC. As a result, the battery control apparatus 100 can reduce an amount of communication with the control apparatus 310 and can reduce a processing load on the control apparatus 310 side.

Here, description will be provided with reference to the flowchart of Fig. 5 again. If a response signal is not received by the module number counter 112 in the above-described process of Step S106, the abnormality determiner 116 determines whether or not a failure signal is received from each of the battery modules MDL via the second communication line BS (Step S118). For example, the abnormality determiner 116 determines that the module controller 20 is normal and any of the secondary batteries 10-1 to 10-k is abnormal and determines that some internal functions of the battery module MDL have failed if it is determined that the failure signal is received (Step S120). On the other hand, for example, the abnormality determiner 116 determines that all of the module controller 20 and the secondary batteries 10-1 to 10-k are abnormal and determines that all of the battery modules MDL have failed if it is determined that the failure signal is not received (Step S122).

Subsequently, the information transmitter 118 notifies the control apparatus 310 of information indicating the result of the determination that some or all of the battery modules MDL have failed (Step S124). The control apparatus 310 receives the information, controls the breaker 320, cuts off a current flowing through the battery module MDL, and stops the battery system 200. Thus, the process of the flowchart ends.

According to the battery control apparatus 100 in the first embodiment described above, when the module number counter 112 for counting the number of battery modules MDL for each of the plurality of first communication lines DC, the serial information setter 114 configured to set a series of pieces of information for the battery modules MDL connected to the first communication lines DC as information for identifying each of the battery modules MDL on the basis of the number of battery modules MDL counted by the module number counter 112, and the information transmitter 118 configured to transmit management information in which status information of each of the battery modules MDL is associated with one piece of the series of pieces of information set by the serial information setter 114 to the control apparatus 310 are provided, an increase in communication load can be minimized even when a communication channel ch is freely set. For this reason, a user can flexibly determine whether battery modules MDL are arranged in series, in parallel, or in multiple series and multiple parallel lines without considering performance degradation of a device. In other words, the battery control apparatus 100 can allow batteries to be more flexibly arranged.

Also, according to the battery control apparatus 100 in the first embodiment, an amount of communication with the control apparatus 310 can be reduced and a processing load on the control apparatus 310 side can be reduced because a series of pieces of information is set only to battery modules MDL which are actually connected to the first communication line DC.

According to the battery control apparatus 100 in the first embodiment, a state of a battery module MDL can be more accurately monitored because it is determined whether the battery module MDL has failed on the basis of a signal received from the battery module MDL via the first communication line DC and the second communication line BS.

### (Second embodiment)

A battery control apparatus 100 according to a second embodiment will be described below. The battery control apparatus 100 in the second embodiment and that in the first embodiment differ in that a battery system 200 of the battery control apparatus 100 in the second embodiment is not started up when a battery module MDL is not connected to a first communication line DC of a prescribed communication channel ch. Therefore, description will focus on an associated difference and description of common portions will be omitted.

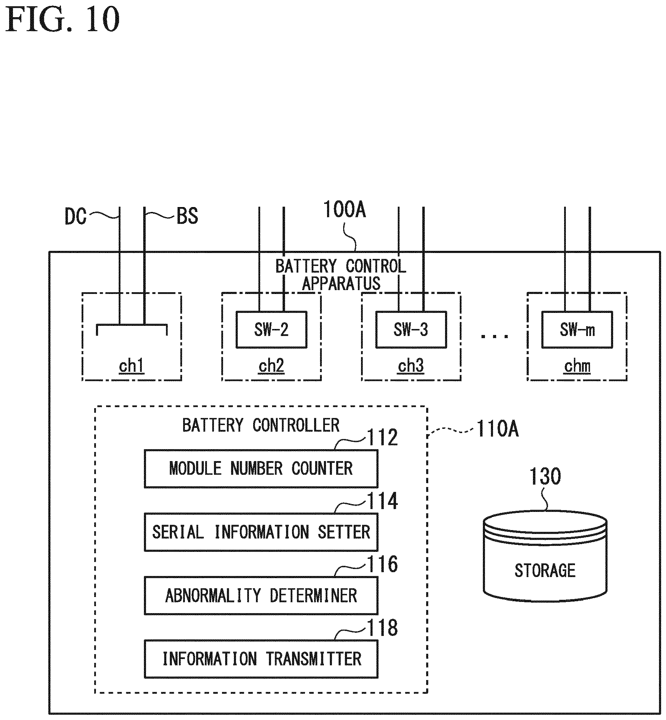

Fig. 10 is a diagram illustrating an example of a constitution of a battery control apparatus 100A according to the second embodiment. In the illustrated example, the prescribed communication channel ch is set as a communication channel ch1 and a connection switch SW corresponding to the communication channel ch1 is not provided in the battery control apparatus 100A. In this case, a module number counter 112 first transmits a check signal to the first communication line DC-1 of the prescribed communication channel ch1. At this time, when the first communication line DC-1 is not connected to a connection switch SW-1 corresponding to the prescribed communication channel ch1, the information transmitter 118 notifies a control apparatus 310 of a signal indicating stopping starting-up of the battery system 200 because the module number counter 112 cannot receive a response signal via the first communication line DC-1. The control apparatus 310 receives the signal, immediately controls a breaker 320, cuts off a current flowing through the battery module MDL, and stops the battery system 200. Thus, the battery control apparatus 100A in the second embodiment can more accurately monitor a state of the battery module MDL as in the first embodiment described above.

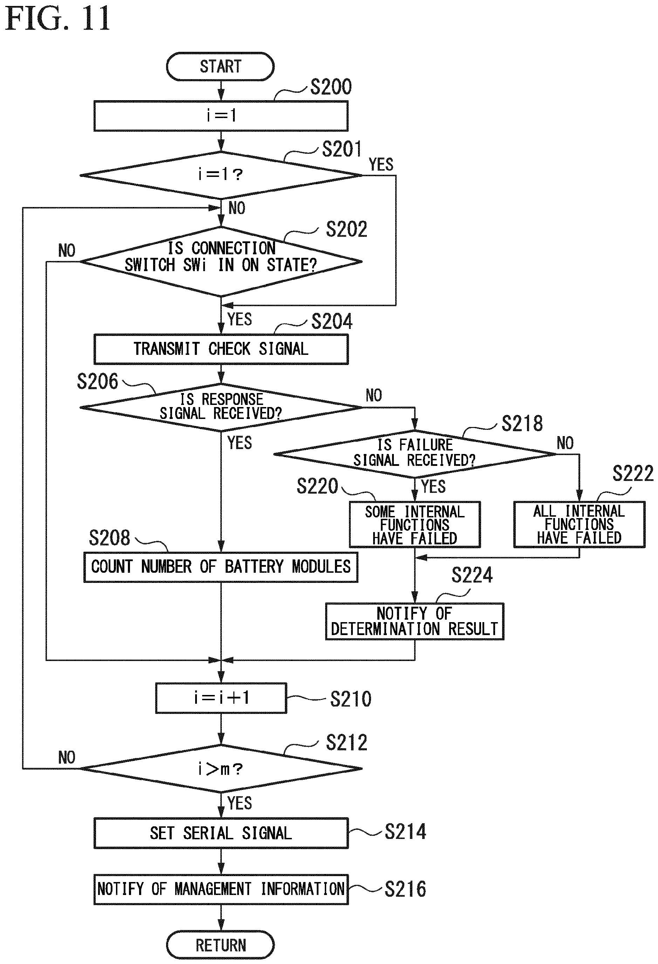

Alternatively, the battery control apparatus 100A may perform the following processing. Fig. 11 is a flowchart for describing an example of a flow of a process of the battery controller 110A according to the second embodiment. A process of the flowchart is started, for example, when the battery system 200 is started up.

First, the module number counter 112 sets an internal parameter i to 1 (Step S200). Subsequently, the module number counter 112 determines whether or not the internal parameter i is 1 (Step S201). If it is determined that the internal parameter i is 1, the module number counter 112 skips a determination process in Step S202. On the other hand, if it is determined that the internal parameter i is not 1, the module number counter 112 determines whether or not a connection switch SWi corresponding to an i^{th} communication channel chi is in an on state (Step S202).

If it is determined that the connection switch SWi is in the on state, the module number counter 112 transmits a check signal to a battery module MDLi-1 via an output side line of a first communication line DC-1 forming the communication channel chi (Step S204).

Subsequently, the module number counter 112 determines whether or not a check signal (response signal) with a rewritten variable is received from a battery module MDL (for example, MDL1-n1) of a last stage via an input side line of the first communication line DC-i (Step S206).

If it is determined that the response signal is received, the module number counter 112 counts (determines) the number of battery modules MDL connected to the first communication line DC-1 with reference to a value of the variable included in the response signal (Step S208).

Subsequently, the module number counter 112 increments the internal parameter i by 1 (Step S210) and determines whether or not the internal parameter i exceeds the maximum number m of communication channels (Step S212). The module number counter 112 repeats the above-described processes of Step S202 to Step S210 until a value of a communication channel number reaches the maximum number m of communication channels.

If it is determined that the value of the communication channel number incremented by 1 by the module number counter 112 exceeds the maximum number m of communication channels, the serial information setter 114 sets a serial number for each of the battery modules MDL on the basis of the number of battery modules MDL counted by the module number counter 112 (Step S214).

Subsequently, the information transmitter 118 associates status information of each of the battery modules MDL with the serial number set by the serial information setter 114, notifies the control apparatus 310 of the associated information as one piece of management information (Step S216), and ends the process of the flowchart.

On the other hand, if it is determined that a response signal is not received by the module number counter 112, the abnormality determiner 116 determines whether or not a failure signal is received from battery modules MDL via the second communication line BS (Step S218). If it is determined that the failure signal is received, for example, the abnormality determiner 116 determines that some internal functions of the battery modules MDL have failed (Step S220). On the other hand, if it is determined that the failure signal is not received, for example, the abnormality determiner 116 determines that all of the battery modules MDL have failed (Step S222).

Subsequently, the information transmitter 118 notifies the control apparatus 310 of information indicating the result of determination that some or all of the battery modules MDL have failed (Step S224). The control apparatus 310 receives the information, controls the breaker 320, cuts off a current flowing through the battery modules MDL, and stops the battery system 200. Thus, the process of the flowchart ends.

According to at least one of the embodiments described above, when the module number counter 112 configured to count the number of battery modules MDL for each of the plurality of first communication lines DC, the serial information setter 114 configured to set a series of pieces of information for the battery modules MDL connected to the first communication lines DC as information for identifying each of the battery modules MDL on the basis of the number of battery modules MDL counted by the module number counter 112, and the information transmitter 118 configured to transmit management information in which status information of each of the battery modules MDL is associated with one piece of the series of pieces of information set by the serial information setter 114 to the control apparatus 310 are provided, power lines EL can be freely wired in a plurality of battery modules MDL. As a result, the battery control apparatus 100 in the first embodiment can cause batteries to be more flexibly arranged such that the battery modules MDL are electrically connected in series, in parallel, or in multiple series and multiple parallel lines.

While some embodiments of the present invention have been described, these embodiments have been presented by way of example and are not intended to limit the scope of the present invention. These embodiments can be realized in various other forms and various omissions, substitutions, and modifications are possible without departing from the invention. These embodiments or modifications thereof are included in the scope of the present invention as defined in the appended claims.

## Claims

1. A battery control apparatus (100) comprising:
a counter (112) which counts, for communication lines (DC, BS) to which a plurality of battery modules (MDL) are connected to form communication channels, the number of battery modules connected to each of the communication lines;
a serial information setter (114) which sets a series of pieces of information about the battery modules connected to the plurality of communication lines as information for identifying the battery modules on the basis of the number of battery modules counted by the counter; and
an information transmitter (118) which transmits, to an external apparatus (310), management information in which status information of each of the battery modules is associated with each piece of the series of pieces of information set by the serial information setter,
wherein the serial information setter sets the series of pieces of information so that information across the plurality of communication lines is continuous.

2. The battery control apparatus (100) according to Claim 1,
wherein the plurality of communication lines includes a first communication line (DC) and a second communication line (BS), and
wherein the information transmitter (118) transmits information corresponding to the plurality of communication channels to the external apparatus as one piece of management information when the plurality of communication channels are formed by connecting the plurality of battery modules to each of the first communication line and the second communication line.

3. The battery control apparatus (100) according to Claim 1, further comprising:
a connection switch which is provided to correspond to each of the communication channels and outputs an on signal when each of the communication lines is connected,
wherein the counter (112) counts the number of battery modules connected to the communication line corresponding to the connection switch which outputs the on signal for each of the communication lines corresponding to the connection switch which outputs the on signal.

4. The battery control apparatus (100) according to Claim 1, wherein the plurality of battery modules are connected in series through the communication lines, and
the counter (112) transmits a predetermined signal to the battery modules connected to the communication lines via the communication lines, analyzes content of signals received from the battery modules connected to the communication lines via the communication lines in response to the transmitted predetermined signal, and counts the number of the plurality of battery modules connected to the communication lines for each of the communication lines.

5. The battery control apparatus (100) according to Claim 4, further comprising:
an abnormality determiner which determines whether or not an abnormality has occurred in the plurality of battery modules connected to the communication lines in accordance with the presence or the absence of a signal corresponding to a predetermined signal transmitted by the counter.

6. A battery system comprising:
the battery control apparatus (100) according to Claim 1; and
a plurality of battery modules which are connected to the battery control apparatus in series through the communication lines and increase or decrease information included in a predetermined signal upon receiving the predetermined signal from the battery control apparatus via the communication lines and transmit the value in information to the next battery module or the battery control apparatus.

## Patentansprüche

1. Batteriesteuerungsvorrichtung (100), umfassend:
einen Zähler (112), der für Kommunikationsleitungen (DC, BS), mit denen mehrere Batteriemodule (MDL) verbunden sind, um Kommunikationskanäle zu bilden, die Anzahl von mit jeder der Kommunikationsleitungen verbundenen Batteriemodulen zählt;
einen Reiheninformationssetzer (114), der eine Reihe von Informationen zu den mit den mehreren Kommunikationsleitungen verbundenen Batteriemodulen als Informationen zum Identifizieren der Batteriemodule auf der Basis der vom Zähler gezählten Anzahl von Batteriemodulen setzt; und
einen Informationssender (118), der Verwaltungsinformationen, in denen Statusinformationen jedes der Batteriemodule jeder der vom Reiheninformationssetzer gesetzten Reihe von Informationen zugeordnet sind, an eine externe Vorrichtung (310) sendet,
wobei der Reiheninformationssetzer die Reihe von Informationen so setzt, dass Informationen über die mehreren Kommunikationsleitungen kontinuierlich sind.

2. Batteriesteuerungsvorrichtung (100) nach Anspruch 1,
wobei die mehreren Kommunikationsleitungen eine erste Kommunikationsleitung (DC) und eine zweite Kommunikationsleitung (BS) enthalten und
wobei der Informationssender (118) mit den mehreren Kommunikationskanälen korrespondierende Informationen als eine Verwaltungsinformation an die externe Vorrichtung sendet, sobald die mehreren Kommunikationskanäle gebildet werden, indem die mehreren Batteriemodule mit sowohl der ersten Kommunikationsleitung als auch der zweiten Kommunikationsleitung verbunden werden.

3. Batteriesteuerungsvorrichtung (100) nach Anspruch 1, ferner umfassend:
einen Verbindungsschalter, der bereitgestellt wird, sodass er mit jedem der Kommunikationskanäle korrespondiert, und ein Ein-Signal ausgibt, wenn jede der Kommunikationsleitungen verbunden wird,
wobei der Zähler (112) die Anzahl von Batteriemodulen zählt, die mit der Kommunikationsleitung verbunden sind, die mit dem Verbindungsschalter korrespondiert, der das Ein-Signal für jede der Kommunikationsleitungen ausgibt, die mit dem Verbindungsschalter, der das Ein-Signal ausgibt, korrespondiert.

4. Batteriesteuerungsvorrichtung (100) nach Anspruch 1, wobei die mehreren Batteriemodule durch die Kommunikationsleitungen in Reihe verbunden sind und
der Zähler (112) über die Kommunikationsleitungen ein vorgegebenes Signal an die mit den Kommunikationsleitungen verbundenen Batteriemodule sendet, Inhalt von Signalen, die von den mit den Kommunikationsleitungen verbundenen Batteriemodulen empfangen werden, über die Kommunikationsleitungen als Reaktion auf das gesendete vorgegebene Signal analysiert und die Anzahl der mehreren mit den Kommunikationsleitungen verbundenen Batteriemodule für jede der Kommunikationsleitungen zählt.

5. Batteriesteuerungsvorrichtung (100) nach Anspruch 4, ferner umfassend:
einen Anomaliebestimmer, der in Abhängigkeit von dem Vorliegen oder dem Nichtvorliegen eines Signals, das mit einem vom Zähler gesendeten vorgegebenen Signal korrespondiert, bestimmt, ob in den mehreren mit den Kommunikationsleitungen verbundenen Batteriemodulen eine Anomalie aufgetreten ist oder nicht.

6. Batteriesystem, umfassend:
die Batteriesteuerungsvorrichtung (100) nach Anspruch 1; und
mehrere Batteriemodule, die mit der Batteriesteuerungsvorrichtung durch die Kommunikationsleitungen in Reihe verbunden sind und Informationen, die in einem vorgegebenen Signal enthalten sind, erhöhen oder verringern, wenn das vorgegebene Signal von der Batteriesteuerungsvorrichtung über die Kommunikationsleitungen empfangen wird, und den Wert in Informationen an das nächste Batteriemodul oder die Batteriesteuerungsvorrichtung senden.

## Revendications

1. Appareil (100) de commande de batterie, comprenant
un compteur (112) qui comptabilise, pour des lignes de communication (DC, BS) auxquelles sont connectés une pluralité de modules de batterie (MDL) pour former des canaux de communication, le nombre de modules de batterie connectés à chacune des lignes de communication ;
une unité de définition d'informations en série (114) qui définit une série d'éléments d'informations concernant les modules de batterie connectés à la pluralité de lignes de communication comme des informations permettant d'identifier les modules de batterie sur la base du nombre de modules de batterie comptabilisé par le compteur ; et
un émetteur d'informations (118) qui transmet, à un appareil externe (310), des informations de gestion dans lesquelles des informations d'état de chacun des modules de batterie sont associées à chaque élément de la série d'éléments d'informations définie par l'unité de définition d'informations en série,
l'unité de définition d'informations en série définissant la série d'éléments d'informations de manière à assurer la continuité d'informations à travers la pluralité de lignes de communication.

2. Appareil (100) de commande de batterie selon la revendication 1,
dans lequel la pluralité de lignes de communication comportent une première ligne de communication (DC) et une deuxième ligne de communication (BS), et
dans lequel l'émetteur d'informations (118) transmet à l'appareil externe des informations correspondant à la pluralité de canaux de communication comme un élément d'informations de gestion lorsque la pluralité de canaux de communication sont formés par connexion de la pluralité de modules de batterie à chacune des première et deuxième lignes de communication.

3. Appareil (100) de commande de batterie selon la revendication 1, comprenant en outre :
un commutateur de connexion qui est prévu en correspondance avec chacun des canaux de communication et qui délivre un signal de conduction lorsque chacune des lignes de communication est connectée,
dans lequel le compteur (112) comptabilise le nombre de modules de batterie connectés à la ligne de communication correspondant au commutateur de connexion qui délivre le signal de conduction pour chacune des lignes de communication correspondant au commutateur de connexion qui délivre le signal de conduction.

4. Appareil (100) de commande de batterie selon la revendication 1, dans lequel la pluralité de modules de batterie sont connectés en série par le biais des lignes de communication, et
le compteur (112) transmet un signal prédéterminé aux modules de batterie connectés aux lignes de communication via les lignes de communication, analyse le contenu de signaux reçus depuis les modules de batterie connectés aux lignes de communication via les lignes de communication en réponse au signal prédéterminé transmis, et comptabilise le nombre de la pluralité de modules de batterie connectés aux lignes de communication pour chacune des lignes de communication.

5. Appareil (100) de commande de batterie selon la revendication 4, comprenant en outre :
une unité de détermination d'anomalie qui détermine si une anomalie s'est ou non produite dans la pluralité de modules de batterie connectés aux lignes de communication en fonction de la présence ou de l'absence d'un signal correspondant à un signal prédéterminé transmis par le compteur.

6. Système de batterie, comprenant :
un appareil (100) de commande de batterie selon la revendication 1 ; et
une pluralité de modules de batterie qui sont connectés à l'appareil de commande de batterie en série par le biais des lignes de communication et augmentent ou réduisent les informations contenues dans un signal prédéterminé lors de la réception du signal prédéterminé depuis l'appareil de commande de batterie via les lignes de communication et transmettent la valeur dans les informations au module de batterie suivant ou à l'appareil de commande de batterie.
